# EUROPÄISCHE PATENTANMELDUNG

(11) **EP 1 852 026 A1**
(43) Veröffentlichungstag der Anmeldung: **07.11.2007**
(21) Anmeldenummer: 07016528.7
(22) Anmeldetag: 28.07.2004
(51) Int. Cl.: A43B 23/07, A43B 1/00, A43B 7/00, A62D 5/00, B32B 27/00

(54) **Schuh, insbesondere Stiefel, mit ABC-Schutz mit Aktivkohlefaserflächengebilde als Adsorptionsschicht**

(30) Priorität: 09.10.2003 DE 10347673
(62) Teilanmeldung aus: 04017790.9
(71) Anmelder: Blücher GmbH, 40699 Erkrath (DE)
(72) Erfinder: von Blücher, Hasso, 40699 Erkrath (DE)
(74) Vertreter: Gesthuysen, von Rohr & Eggert

(57) **Zusammenfassung**

Beschrieben ist ein Schuh (1), insbesondere Stiefel, mit Schutzfunktion gegenüber chemischen Giften, insbesondere chemischen Kampfstoffen, mit mehrschichtigem Schichtaufbau (2), welcher eine im Tragezustand vom Fuß abgewandte Außenschicht (3) und eine der Außenschicht (3) zugeordnete, im Tragezustand dem Fuß zugewandte Innenschicht (4), insbesondere ein Schuhinnenfutter, aufweist, wobei zwischen der Außenschicht (3) und der Innenschicht (4) zusätzlich eine Adsorptionsschicht (5) auf Basis eines chemische Gifte adsorbierenden Adsorptionsmaterials (6) angeordnet ist und wobei die Adsorptionsschicht (5) als Adsorptionsmaterial (6) Aktivkohlefasern in Form eines Aktivkohleflächengebildes umfaßt. Auf diese Weise wird ein effizienter Schutz gegenüber chemischen Giften, insbesondere chemischen Kampfstoffen, bei gleichzeitig hohem Tragekomfort erreicht.

## Beschreibung

Die vorliegende Erfindung betrifft einen Schuh, insbesondere einen Stiefel, mit Schutzfunktion gegenüber chemischen Giften, insbesondere chemischen Kampfstoffen, nach dem Oberbegriff des Anspruchs 1, insbesondere für den militärischen Einsatz oder für den ABC-Einsatz.

Es gibt eine Reihe von Stoffen, die von der Haut aufgenommen werden und zu schweren körperlichen Schäden führen. Als Beispiele seien das blasenziehende Lost (Gelbkreuz) und das Nervengift Sarin erwähnt. Menschen, die mit solchen Giften in Kontakt kommen können, müssen eine geeignete Schutzausrüstung tragen bzw. durch geeignete Schutzmaterialien gegen diese Gifte geschützt werden.

Zum Schutz des Körpers, insbesondere der Extremitäten und des Rumpfes, gibt es entsprechende Schutzanzüge. Zum Schutz des Kopfes, insbesondere des Gesichtes, sowie der Atemwege werden in der Regel Gasmasken (ABC-Schutzmasken), gegebenenfalls zusammen mit Kapuzen, getragen.

Des weiteren ist aber auch darauf zu achten, daß auch die Füße mit einem ausreichenden Schutz gegenüber solchen Giften ausgestattet sind. Insbesondere muß ein solches schützendes Schuhwerk für den militärischen Einsatz oder den ABC-Einsatz geeignet sein.

Zu diesem Zweck werden gemäß dem Stand der Technik für den militärischen Einsatz bzw. den ABC-Einsatz Überschuhe mit ABC-Schutz eingesetzt, die über das eigentliche Schuhwerk übergezogen werden. Dies hat den entscheidenden Nachteil, daß das Schuhwerk mit zusätzlichem Gewicht belastet wird und zudem der Tragekomfort aufgrund des ABC-Überschuhs drastisch reduziert wird. Schließlich ist bei der Verwendung des ABC-Überschuhs keine effiziente abdichtende Verbindung mit dem ABC-Schutzanzug möglich, so daß chemische Gifte, z. B. Kampfstoffe, den Übergang von ABC-Überschuh und ABC-Schutzanzug passieren und auf den Träger des ABC-Schutzanzugs einwirken können.

Die alternative Verwendung von ABC-Schutzsocken, die z. B. in herkömmlichen Militärstiefeln getragen werden können, ist gleichermaßen wenig effizient, da diese zum einen nicht das Eindringen von Giften in das eigentliche Schuhwerk verhindern können und zum anderen der Tragekomfort nicht sehr groß ist. Auch hier besteht das Problem der mangelnden Abdichtung des Übergangs zum ABC-Schutzanzug.

Es ist daher die Aufgabe der vorliegenden Erfindung, einen Schuh, insbesondere einen Stiefel, mit Schutzfunktion gegenüber chemischen Giften, insbesondere chemischen Kampfstoffen, bereitzustellen, welcher sich insbesondere für den militärischen Einsatz oder den ABC-Einsatz eignet und die zuvor geschilderten Nachteile des Standes der Technik zumindest teilweise vermeidet.

Zur Lösung der zuvor geschilderten Aufgabe schlägt die vorliegende Erfindung ein Schuh, insbesondere einen Stiefel (z. B. Militärstiefel oder ABC-Schutzstiefel), gemäß Anspruch 1 vor. Weitere, vorteilhafte Ausgestaltungen des erfindungsgemäßen Schuhs sind Gegenstand der Unteransprüche.

Die grundlegende Idee der vorliegenden Erfindung besteht darin, einen Schuh, insbesondere einen Stiefel, mit mehrschichtigem Schichtaufbau, welcher einen im Tragezustand vom Fuß abgewandte Außenschicht und eine der Außenschicht zugeordnete, im Tragezustand dem Fuß zugewandte Innenschicht, insbesondere ein Schuhinnenfutter, aufweist, dadurch mit einer Schutzfunktion gegenüber chemischen Giften, insbesondere chemischen Kampfstoffen, auszurüsten, daß zwischen der Außenschicht und der Innenschicht zusätzlich eine Adsorptionsschicht auf Basis eines chemische Gifte adsorbierenden Adsorptionsmaterials angeordnet bzw. vorgesehen ist, wobei die Adsorptionsschicht als Adsorptionsmaterial Aktivkohlefasern in Form eines Aktivkohleflächengebildes umfaßt.

Auf diese Weise wird erreicht, daß gegebenenfalls durch die Außenschicht des Schuhs eingedrungene chemische Gifte, insbesondere chemische Kampfstoffe, nicht mit dem Fuß in Kontakt kommen können, da sie vom Adsorptionsmaterial der Adsorptionsschicht aufgenommen bzw. adsorbiert und auf diese Weise unschädlich gemacht werden können.

Die Schutzfunktion der Adsorptionsschicht bzw. letztendlich des Schuhs kann noch dadurch gesteigert werden, daß der erfindungsgemäße Schuh zusätzlich mit mindestens einer Membran ausgestattet wird, die gegenüber chemischen Giften, insbesondere chemischen Kampfstoffen, zumindest im wesentlichen undurchlässig ist oder deren Durchtritt zumindest verzögert. Grundsätzlich kann die Membran entweder zwischen der Außenschicht und der Adsorptionsschicht oder aber zwischen der Innenschicht und der Adsorptionsschicht angeordnet sein. Vorteilhafterweise ist die Membran aber zwischen der Außenschicht und der Adsorptionsschicht angeordnet, so daß gegebenenfalls eingedrungene chemische Gifte, insbesondere chemische Kampfstoffe, die Adsorptionsschicht nicht oder zumindest zu einem überwiegenden Teil gar nicht erst erreichen, so daß die Adsorptionskapazität der Adsorptionsschicht quasi unerschöpflich bleibt. Durch das Vorsehen der zusätzlichen Membran wird gleichzeitig eine gute Dekontaminierbarkeit und Regenerierbarkeit des erfindungsgemäßen Schuhs erreicht.

Weitere Vorteile, Eigenschaften, Aspekte und Merkmale der vorliegenden Erfindung ergeben sich aus der folgenden Beschreibung eines in der Zeichnung dargestellten, bevorzugten Ausführungsbeispiels. Es zeigt:
- Fig. 1: eine schematische Darstellung eines Schuhs, insbesondere Stiefels, gemäß einem bevorzugten Ausführungsbeispiel der Erfindung;
- Fig. 2: eine schematische Schnittdarstellung durch den Schichtaufbau eines erfindungsgemäßen Schuhs, insbesondere Stiefels, gemäß einem bevorzugten Ausführungsbeispiel der Erfindung.

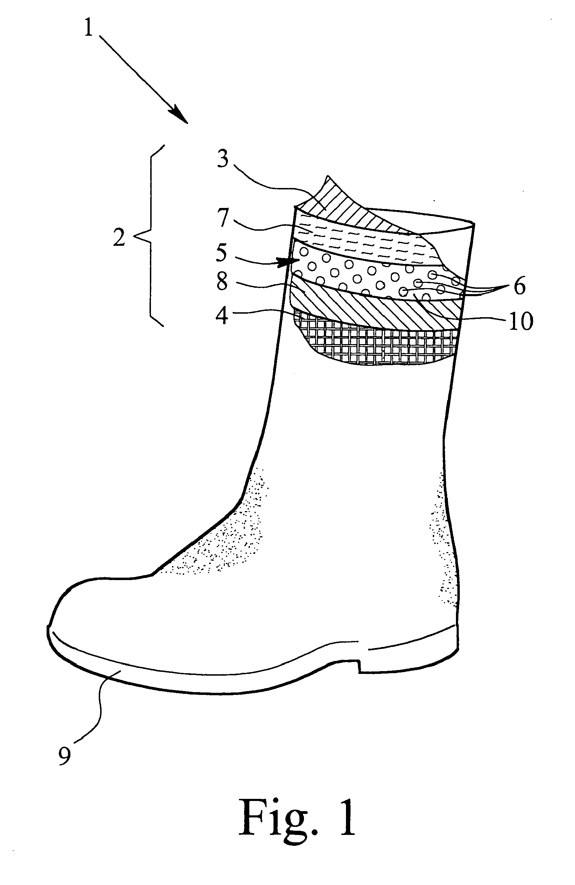

Fig. 1 zeigt einen erfindungsgemäßen Schuh 1, insbesondere Stiefel, mit Schutzfunktion gegenüber chemischen Giften, insbesondere chemischen Kampfstoffen. Der erfindungsgemäße Schuh 1 weist einen mehrschichtigen Schichtaufbau 2 mit einer außenseitigen (d. h. im Tragezustand vom Fuß abgewandten) Außenschicht 3 und einer der Außenschicht 3 zugeordneten, innenseitigen (d. h. im Tragezustand dem Fuß zugewandten) Innenschicht 4, insbesondere einem Schuhinnenfutter, auf. Zwischen der Außenschicht 3 und der Innenschicht 4 ist erfindungsgemäß zusätzlich eine Adsorptionsschicht 5 mit einem chemische Gifte adsorbierenden Adsorptionsmaterial 6 angeordnet.

Die Adsorptionsschicht 5 umfaßt als Adsorptionsmaterial 6 Aktivkohlefasern in Form eines Aktivkohleflächengebildes. Hierdurch wird ein effizienter Schutz gegenüber chemischen Giften, insbesondere chemischen Kampfstoffen, bei gleichzeitig hohem Tragekomfort gewährleistet.

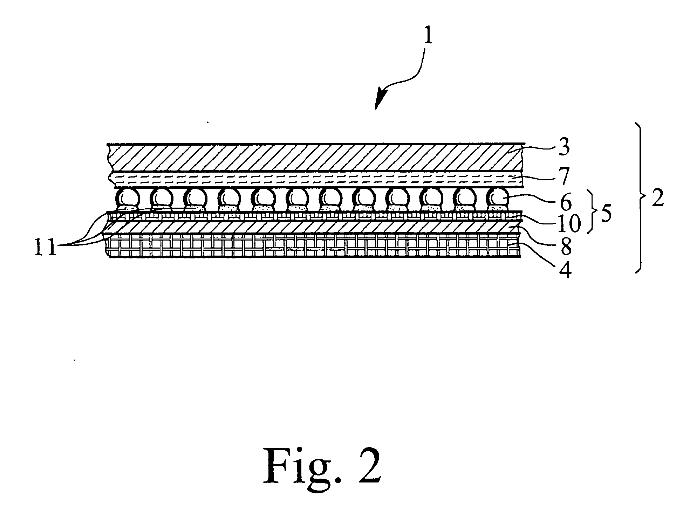

Wie aus den Fig. 1 und 2 ersichtlich, kann der erfindungsgemäße Schuh 1 zusätzlich zu der Adsorptionsschicht 5 mindestens eine Membran 7, die gegenüber chemischen Giften, insbesondere chemischen Kampfstoffen, zumindest im wesentlichen undurchlässig ist oder aber deren Durchtritt zumindest verzögert, aufweisen. Zur Erhöhung des Tragekomforts ist diese Membran 7 vorteilhafterweise zumindest im wesentlichen wasser- und/oder luftundurchlässig, aber wasserdampfdurchlässig ausgebildet. Die Membran 7 kann grundsätzlich entweder zwischen der Außenschicht 3 und der Adsorptionsschicht 5 oder aber zwischen der Innenschicht 4 und der Adsorptionsschicht 5 angeordnet sein. Bevorzugterweise wird die Membran 7 aber zwischen der Außenschicht 3 und der Adsorptionsschicht 5 angeordnet (d. h. also auf der im Tragezustand vom Fuß abgewandten Seite der Adsorptionsschicht 5), so daß gegebenenfalls durch die Außenschicht 3 des Schuhs 1 eingedrungene Gifte bereits von der Membran 7 zurückgehalten werden und folglich die Adsorptionsschicht 5 gar nicht erst erreichen oder allenfalls in nur äußerst geringen Mengen; auf diese Weise wird zum einen die Kapazität der Adsorptionsschicht quasi niemals erschöpft, und zum anderen wird durch die Anwesenheit der Membran 7 ein zusätzlicher Schutz für den Träger des Schuhs 1 bereitgestellt, so daß ein Schuh 1 mit sozusagen doppelter Schutzfunktion gegenüber chemischen Giften resultiert (nämlich einerseits durch die Sperrwirkung der Membran 7 und andererseits durch die Adsorptionswirkung der Adsorptionsschicht 5, welche als Adsorptionsmaterial 6 Aktivkohlefasern in Form eines Aktivkohleflächengebildes umfaßt). Durch die Anwesenheit einer Membran 7 wird zudem erreicht, daß der Schuh 1 dekontaminierbar und regenerierbar wird; denn durch die Außenschicht 3 gegebenenfalls eingedrungene Gifte können durch entsprechende Behandlungsverfahren von der Membran entfernt (z. B. heruntergespült) werden, beispielsweise mit geeigneten Dekontaminationslösungen, die dem Fachmann zu diesem Zwecke bestens bekannt sind.

Des weiteren kann vorgesehen sein, daß zwischen der Innenschicht 4 und der Adsorptionsschicht 5 oder aber zwischen der Innenschicht 4 und der Membran 7 oder aber vorzugsweise zwischen der Adsorptionsschicht 5 und der Membran 7 - je nach Abfolge der Schichten 4, 5 und 7 im Schichtaufbau 2 - außerdem eine Abstandsschicht 8 angeordnet ist, z. B. in Form eines Vlieses (Nonwoven), einer dünnen Schaumstoffschicht oder eines textilen Flächengebildes (z. B. eines Gewirkes). Vorteilhafterweise ist die Abstandsschicht 8 unmittelbar an der Innenschicht 4 angrenzend angeordnet (d. h. auf der im Tragezustand dem Fuß abgewandten Seite der Innenschicht 4). Gemäß einer besonders vorteilhaften Ausführungsform ist die Abstandsschicht 8 zwischen der Adsorptionsschicht 5 und der Membran 7 angeordnet. Die zusätzliche Abstandsschicht 8 hat den Vorteil, daß sie die mechanische Belastung der Adsorptionsschicht 5 bzw. der Membran 7 verringert, weil zwischen der Innenschicht 4 einerseits und der Adsorptionsschicht 5 bzw. Membran 7 andererseits bzw. zwischen der Adsorptionsschicht 5 und der Membran 7 eine zusätzliche Schicht befindlich ist, welche mechanische Belastungen abfangen bzw. dämpfen kann. Zum anderen verhindert dies, daß Verunreinigungen, die von der Person, welche den Schuh 1 trägt, stammen (wie z. B. Fußschweiß), das Adsorptionsmaterial 6 der Adsorptionsschicht 5 unnötig belasten; auf diese Weise wird somit auch die Effizienz der Adsorptionsschicht 5 erhöht. Zum anderen steigert die zusätzliche Abstandsschicht 8 den Tragekomfort des erfindungsgemäßen Schuhs 1, insbesondere das weiche Tragegefühl.

Im allgemeinen sind die einzelnen Schichten 3, 4, 5, 7 und 8 des Schichtaufbaus 2 jeweils miteinander verbunden; dies geschieht mit an sich für diese Zwecke bekannten Methoden (z. B. durch Verkleben, Verschweißen, Vernähen, Verheften etc.). Vorteilhafterweise erfolgt das Verbinden bzw. Fixieren der einzelnen Schichten 3, 4, 5, 7 und 8 des Schichtaufbaus 2 jeweils miteinander nahtlos, vorzugsweise ohne Beschädigung der einzelnen Schichten 3, 4, 5, 7 und 8 (z. B. durch Verkleben, Verschweißen etc.). Für den Fall, daß die Schichten 3, 4, 5, 7 und 8, zumindest teilweise, vernäht oder dergleichen werden, empfiehlt es sich, die Nahtstellen abzudichten (z. B. mit einem sogenannten Nahtversiegelungsband). Insbesondere bilden die einzelnen Schichten 3, 4, 5, 7 und 8 des Schichtaufbaus 2 einen zusammenhängenden Verbund aus.

Die einzelnen Schichten 3, 4, 5, 7 und 8 bzw. der Schichtaufbau 2 können sich dabei über den gesamten Fuß einschließlich Fußsohle, Fußknöchel und eines Teils der unteren Wade erstrecken. Gemäß dieser Ausführungsform bilden die einzelnen Schichten 3, 4, 5, 7 und 8 bzw. der Schichtaufbau 2 einen zusammenhängenden Stiefel in Fußform mit Schaft ("Bootie"), der im Bereich der Fußsohle mit einer Schuhsohle 9 verbunden bzw. ausgestattet ist (z. B. mit einer Schuhsohle 9 verklebt oder dergleichen ist).

Gemäß einer alternativen Ausführungsform erstrecken sich die einzelnen Schichten 3, 4, 5, 7 und 8 bzw. der Schichtaufbau 2 nicht über den Bereich der Fußsohle, sondern nur über den Bereich des restlichen Fußes, d. h. über den Bereich der Fußvorderseite (Fußrist), des Knöchels und eines Teils der Wade im Fall eines Stiefels; entlang des Bereich der Fußkonturen sind bei dieser Ausführungsform die einzelnen Schichten 3, 4, 5, 7 und 8 bzw. der Schichtaufbau 2 abdichtend mit einer Sohle 9 verbunden. Für den Bereich der Fußsohle kann gemäß dieser Ausführungsform zusätzlich eine Innensohle (z. B. in der Art einer Schuheinlage oder aber integriert in die Schuhsohle selbst) mit einem chemische Gifte adsorbierenden Adsorptionsmaterial, insbesondere Aktivkohle, vorgesehen sein; dies ist aber nicht zwingend erforderlich, weil bereits durch den Schichtaufbau 2 zusammen mit der Schuhsohle 9, die abdichtend miteinander verbunden sind, bereits ein effizienter Schutz gegenüber chemischen Giften, insbesondere chemischen Kampfstoffen, bei gleichzeitig hohem Tragekomfort gewährleistet ist.

Damit chemische Gifte, insbesondere Kampfstoffe, nicht über die Sohle 9 in den Schuh eindringen können, ist die Schuhsohle 9 im allgemeinen aus einem solchen Material gebildet, das gegenüber chemischen Giften, insbesondere Kampfstoffen, zumindest im wesentlichen undurchlässig ist oder aber deren Durchtritt zumindest verzögert. Im allgemeinen ist die Sohle 9 außerdem zumindest im wesentlichen wasser- und/oder luftundurchlässig ausgebildet. Im allgemeinen kann die Sohle 9 zu diesen Zwecken aus einem Kunststoff- bzw. Gummimaterial bestehen, welches dem Fachmann für diese Zwecke bekannt ist. Zur Sicherstellung einer effizienten Schutzfunktion sollte die Schuhsohle 9 abdichtend mit dem Schichtaufbau 2 verbunden sein, insbesondere im Bereich des Übergangs von Schuhsohle 9 und Schichtaufbau 2; dies geschieht in an sich bekannter Weise (z. B. durch Vernähen, Verkleben und/oder Verschweißen etc.). Auf diese Weise wird auch der Bereich der Fußsohle wie auch der restliche Fußbereich ausreichend gegenüber einem Eindringen chemischer Gifte geschützt.

Was die Außenschicht 3 des erfindungsgemäßen Schuhs 1 anbelangt, so kann diese aus einem atmungsaktiven, insbesondere wasserdampfdurchlässigen Material, wie z. B. Leder oder Polyamide (insbesondere Nylon, wie z. B. Cordura^{®} von der Fa. DuPont), gebildet sein; Beispiele hierfür sind dichte und widerstandsfähige Polyamid- bzw. Nylonflächengebilde, insbesondere Gewebe oder Gewirke auf dieser Basis. Im Fall atmungsaktiver Materialien als Außenschicht 3 empfiehlt sich eine Oleophobierung und/oder Hydrophobierung des Materials der Außenschicht 3, insbesondere durch eine spezielle Imprägnierung, um ein Eindringen chemischer Gifte (z. B. konzentrierte Tropfen von Kampfstoffen) zu verhindern bzw. zu erschweren. Alternativ kann die Außenschicht 3 aber auch aus einem Kunststoffmaterial bestehen, so z. B. aus Butylgummi, Kautschuken (z. B. Chloroprenkautschuken wie Neoprenen oder Fluorkautschuken) oder aber Fluorelastomeren (z. B. Viton^{®} von der Fa. DuPont Dow Elastomers L.L.C.); in diesem Fall kann eine Oleophobierung bzw. Hydrophobierung entfallen, da diese Materialien bereits als solche oleophob und hydrophob sind.

Was das Material für die Innenschicht 4, insbesondere das Schuhinnenfutter, anbelangt, so können hier beliebige Textilmaterialien, vorzugsweise luftdurchlässige Textilmaterialien verwendet werden, so z. B. textile Flächengebilde. Nichtbeschränkende Beispiele sind Gewebe, Gewirke, Gestricke, Gelege, Textilverbundstoffe oder Vliese. Vorzugsweise wird eine Web- oder Wirkware oder ein Vliesstoff als Material für die Innenschicht 4 verwendet.

Die Adsorptionsschicht 5 umfaßt als Adsorptionsmaterial 6 Aktivkohlefasern in Form eines Aktivkohleflächengebildes.

Die guten Trageeigenschaften des erfindungsgemäßen Schuhs 1 werden bei Verwendung einer Adsorptionsschicht auf Aktivkohlebasis durch die Pufferwirkung der Aktivkohle noch zusätzlich verbessert, weil die Aktivkohle als Feuchtigkeits- bzw. Wasserspeicher oder -puffer (z. B. für Fußschweiß) dient. Bei Verwendung beispielsweise von Aktivkohlekügelchen als Adsorptionsmaterial für die Adsorptionsschicht sind Auflagen von bis zu circa 250 g/m² oder mehr üblich, so daß z. B. bei einem Schweißausbruch etwa 40 g/m² Feuchtigkeit gespeichert werden können, die im Fall einer atmungsaktiven Außenschicht 3 dann wieder nach außen abgegeben werden können.

Im allgemeinen ist die Adsorptionsschicht 5 als ein Adsorptionsflächenfilter ausgebildet. Zu diesem Zweck enthält die Adsorptionsschicht 5 ein chemische Gifte adsorbierendes Adsorptionsmaterial 6, und zwar Aktivkohlefasern in Form eines Aktivkohleflächengebildes, wobei das Adsorptionsmaterial 6 im allgemeinen an einen Träger 10, insbesondere einem textilen Träger, befestigt ist. Das Adsorptionsmaterial 6 der Adsorptionsschicht 5, welches Aktivkohlefasern in Form eines Aktivkohleflächengebildes darstellt, ist dabei vorzugsweise auf der im Tragezustand dem Fuß abgewandten Seite des Trägers 10 angeordnet. Grundsätzlich ist es aber auch möglich, den Träger 10 beidseitig mit Adsorptionsmaterial 6, welches Aktivkohlefasern in Form eines Aktivkohleflächengebildes darstellt, zu beaufschlagen. Im allgemeinen genügt es jedoch, den Träger 10 nur einseitig mit Adsorptionsmaterial 6 zu beaufschlagen. Die Befestigung des Adsorptionsmaterial 6 an den Träger 10 geschieht in an sich üblicher Weise, beispielsweise durch kontinuierlichen oder vorzugsweise diskontinuierlichen Auftrag eines Klebstoffs 11 auf den Träger 10, wobei anschließend das Adsorptionsmaterial 6 an dem Klebstoff 11 fixiert wird. Zur Erhöhung des Tragekomforts, insbesondere zur Vermeidung einer Steifigkeit des Trägers 10 wird ein diskontinuierlicher, insbesondere punktförmiger Klebstoffauftrag bevorzugt, d. h. der Träger ist vorteilhafterweise diskontinuierlich bzw. punktförmig in einem vorzugsweise regelmäßigen Muster bzw. Raster mit dem Adsorptionsmaterial 6 bedruckt. Das eigentliche Adsorptionsmaterial 6 kann in diesem Fall durch ein vorzugsweise luftdurchlässiges Textilmaterial, insbesondere ein textiles Flächengebilde als Abdeckschicht kaschiert werden, um die mechanische Belastung des Adsorptionsmaterials 6 zu verringern (z. B. mit einem Flächengebilde mit einem geringen Flächengewicht von 5 bis 75 g / m², insbesondere 10 bis 50 g / m², vorzugsweise 15 bis 30 g / m²); das Vorsehen einer solchen Abdeck- bzw. Kaschierschicht ist aber rein fakultativ. Für eine effiziente Adsorptionsleistung ist es bevorzugt, wenn mindestens 50 %, insbesondere mindestens 60 %, vorzugsweise mindestens 70 %, besonders bevorzugt mindestens 75 %, ganz besonders bevorzugt mindestens 80 % des Trägers 10 mit Adsorptionsmaterial 6 beaufschlagt sind.

Dabei ist zu beachten, daß die Menge und die Art, insbesondere die Viskosität, des Klebstoffs 11 derart ausgelegt sind, daß das Adsorptionsmaterial 6 der Adsorptionsschicht 5, welches Aktivkohlefasern in Form eines Aktivkohleflächengebildes umfaßt, zu mindestens 50 %, insbesondere zu mindestens 60 %, vorzugsweise zu mindestens 70 %, für die zu adsorbierenden chemischen Gifte, insbesondere die chemischen Kampfstoffe, frei zugänglich ist, d. h. nicht vollständig in den Klebstoff 11 eingedrückt ist bzw. einsinkt.

Gemäß einer besonderen, in den Fig. 1 und 2 nicht dargestellten Ausführungsform dient die Membran 7 gleichzeitig als Träger 10 für das Adsorptionsmaterial 6. In diesem Fall kann die Membran 7 beispielsweise mit dem Adsorptionsmaterial 6 bedruckt bzw. beaufschlagt sein. Bei dieser besonderen Ausführungsform empfiehlt es sich, die Membran 7 so anzuordnen, daß sie im Tragezustand vom Fuß abgewandt ist und das Adsorptionsmaterial 6 folglich dem Fuß zugewandt ist, so daß gegebenenfalls durch das Außenschichtmaterial 3 eingedrungene chemische Gifte zunächst auf die Membran 7 treffen, wo sie zurückgehalten werden, so daß keine oder allenfalls nur geringe Mengen der Gifte auf das Adsorptionsmaterial 6 der Adsorptionsschicht 5 treffen können.

Erfindungsgemäß umfaßt die Adsorptionsschicht 5 als Adsorptionsmaterial 6 Aktivkohlefasern in Form von Aktivkohleflächengebilden. Die Aktivkohleflächengebilde können beispielsweise ein Flächengewicht von 20 bis 200 g / m², insbesondere 30 bis 150 g/m², vorzugsweise 50 bis 120 g/m², aufweisen. Bei diesen Aktivkohleflächengebilden kann es sich beispielsweise um Aktivkohlegewebe, -gewirke, -gelege oder -verbundstoffe handeln (z. B. auf Basis von carbonisierter und aktivierter Cellulose und/oder carbonisierten und aktivierten Acrylnitrilen).

Gleichermaßen ist es auch möglich, das Adsorptionsmaterial 6 der Adsorptionsschicht 5, nämlich die Aktivkohlefasern in Form von Aktivkohleflächengebilden, mit Aktivkohleteilchen zu kombinieren. Aktivkohlefasern haben den Vorteil einer besseren Adsorptionskinetik, während Aktivkohleteilchen eine höhere Adsorptionskapazität aufweisen.

Derartige Aktivkohleteilchen können beispielsweise aus diskreten Aktivkohleteilchen, vorzugsweise in Kornform ("Kornkohle"), besonders bevorzugt in Kugelform ("Kugelkohle"), bestehen. In diesem Fall beträgt der mittlere Durchmesser der Aktivkohleteilchen weniger als 1,0 mm, vorzugsweise weniger als 0,8 mm, bevorzugt weniger als 0,6 mm, beträgt jedoch im allgemeinen mindestens 0,1 mm. Diesbezüglich können die Aktivkohleteilchen im allgemeinen in einer Menge von 5 bis 500 g / m², insbesondere 10 bis 400 g / m², vorzugsweise 20 bis 300 g / m², bevorzugt 25 bis 250 g / m², besonders bevorzugt 50 bis 150 g / m², ganz besonderes bevorzugt 50 bis 100 g / m², auf dem Trägermaterial 10 aufgebracht werden. Geeignete Aktivkohleteilchen weisen innere Oberflächen (BET) von mindestens 800 m²/g, insbesondere von mindestens 900 m²/g, vorzugsweise von mindestens 1.000 m²/g, bevorzugt im Bereich von 800 bis 1.500 m²/g, auf. Kornkohle, insbesondere Kugelkohle, hat den Vorteil, daß sie enorm abriebfest und sehr hart ist, was in bezug auf die Verschleißeigenschaften von großer Bedeutung ist. Der Berstdruck für ein einzelnes Aktivkohleteilchen, insbesondere Aktivkohlekömchen bzw. -kügelchen, sollte im allgemeinen mindestens etwa 5 Newton, insbesondere mindestens etwa 10 Newton, betragen und kann bis zu etwa 20 Newton erreichen.

Zur Erhöhung der Adsorptionseffizienz bzw. Adsorptionsleistung besteht die Möglichkeit, das Adsorptionsmaterial 6 der Adsorptionsschicht 5 außerdem mit mindestens einem Katalysator zu imprägnieren. Erfindungsgemäß geeignete Katalysatoren sind beispielsweise Enzyme und/oder Metallionen, vorzugsweise Kupfer-, Silber-, Cadmium-, Platin-, Palladium-, Zink- und/oder Quecksilberionen. Die Menge an Katalysator kann in weiten Bereichen variieren; im allgemeinen beträgt sie 0,05 bis 12 Gew.-%, vorzugsweise 1 bis 10 Gew.-%, besonders bevorzugt 2 bis 8 Gew.-%, bezogen auf das Gewicht der Adsorptionsschicht 5.

Was die gegebenenfalls vorgesehene Membran 7 anbelangt, so kann es sich hierbei um eine kontinuierliche, insbesondere geschlossene und allenfalls mikroporöse Membran handeln. Die Dicke der Membran 7 kann in weiten Bereichen variieren; im allgemeinen liegt sie im Bereich von 1 bis 500 µm, insbesondere 1 bis 250 µm, vorzugsweise 1 bis 100 µm, bevorzugt 1 bis 50 µm, besonders bevorzugt 2,5 bis 30 µm, ganz besonders bevorzugt 5 bis 25 µm.

Zur Steigerung des Tragekomforts sollte die gegebenenfalls vorhandene Membran 7 wasserdampfdurchlässig sein; insbesondere sollte die Membran 7 bei 25 °C und bei einer Dicke von 50 µm eine Wasserdampfdurchlässigkeit von mindestens 12,5 l / m² pro 24 h, insbesondere mindestens 17,5 l / m² pro 24 h, vorzugsweise mindestens 20 l / m² pro 24 h oder sogar mehr aufweisen (gemessen nach der "Methode des umgekehrten Bechers" bzw. "inverted cup method" nach ASTM E 96 und bei 25 °C) (Zu weiteren Einzelheiten zur Messung der Wasserdampfdurchlässigkeit [water vapour transmission, WVT] vgl. auch McCullough et al. "A comparison of standard methods for measuring water vapour permeability of fabrics" in Meas. Sci. Technol. [Measurements Science and Technology] 14, 1402-1408, August 2003). Hierdurch wird ein besonders hoher Tragekomfort gewährleistet.

Die Membran 7 sollte zu diesen Zwecken einen Wasserdampfdurchgangswiderstand Rₑₜ unter stationären Bedingungen - gemessen nach DIN EN 31 092:1993 vom Februar 1994 ("Textilien - Physiologische Wirkungen, Messung des Wärme- und Wasserdampfdurchgangswiderstandes unter stationären Bedingungen (sweating guarded-hotplate test)") bzw. nach gleichlautender internationaler Norm ISO 11 092 - bei 35 °C von höchstens 25 (m² · Pascal) / Watt, insbesondere höchstens 20 (m² · Pascal) / Watt, vorzugsweise höchstens 13 (m² · Pascal) / Watt, bei einer Dicke von 50 µm aufweisen.

Die gegebenenfalls vorgesehene Membran 7 sollte nur allenfalls quellfähig bzw. wasseraufnahmefähig sein; insbesondere sollte die Quellfähigkeit und/oder das Wasseraufnahmevermögen der Membran 7 höchstens 35 %, insbesondere höchstens 25 %, bezogen auf das Eigengewicht der Membran 7, betragen. Erfindungsgemäß geeignete Membranen 7 sind gegenüber Flüssigkeiten, insbesondere Wasser und/oder gegenüber Aerosolen zumindest im wesentlichen undurchlässig oder verzögern zumindest deren Durchtritt. Zur Erreichung einer allenfalls geringfügigen Quellfähigkeit sollte die Membran 7 keine oder im wesentlichen keine stark hydrophilen Gruppen, insbesondere keine Hydroxylgruppen aufweisen. Zu Zwecken einer geringfügigen Quellung kann die Membran 7 aber schwach hydrophile Gruppen, insbesondere Polyethergruppen, aufweisen.

Die gegebenenfalls vorhandene Membran 7 kann aus einem Kunststoff bzw. Polymermaterial bestehen oder ein solches umfassen. Ein solcher Kunststoff bzw. ein solches Polymer kann beispielsweise ausgewählt sein aus der Gruppe von Polyurethanen, Polyetheramiden, Polyesteramiden, Polytetrafluorethylenen und/oder Polymeren auf Cellulosebasis und/oder Derivaten der vorgenannten Verbindungen. Beispielsweise kann die Membran 7 als Reaktionsprodukt aus der Reaktion eines Isocyanats, insbesondere eines maskierten oder blockierten Isocyanats, mit einem isocyanatreaktiven Vernetzer erhalten sein. So kann die Membran 7 beispielsweise eine polyurethanbasierte Membran sein. Gleichermaßen kann die Membran 7 auch eine expandierte, gegebenenfalls mikroporöse Membran auf Basis von Polytetrafluorethylen sein.

Gemäß einer besonderen Ausführungsform kann die gegebenenfalls vorhandene Membran 7 als ein mehrschichtiges Laminat bzw. als ein mehrschichtiger Verbund ausgebildet sein. Dieses Laminat bzw. dieser Verbund kann aus mindestens zwei, vorzugsweise mindestens drei miteinander verbundenen Schichten oder Lagen bestehen. Beispielsweise kann dieses Laminat bzw. dieser Verbund eine Kernschicht auf Basis eines Polymers auf Cellulosegrundlage und zwei mit der Kernschicht verbundene äußere Schichten, insbesondere auf Basis eines Polyurethans, eines Polyetheramids und/oder eines Polyesteramids, umfassen. Dabei kann die Kernschicht auf Basis eines Polymers auf Cellulosegrundlage als 1 bis 100 µm, insbesondere 5 bis 50 µm, vorzugsweise 10 bis 20 µm dicke Membran ausgebildet sein und die zwei mit der Kernschicht verbundenen äußeren Schichten jeweils als 1 bis 100 µm, insbesondere 5 bis 50 µm, vorzugsweise 5 bis 20 µm dicke Membran ausgebildet sein. Diese besondere Ausgestaltung der Membran 7 ermöglicht es, Sperrschichtmaterialien mit jeweils unterschiedlichen Eigenschaften, insbesondere unterschiedlichen Wasserdampfdurchlässigkeiten und Barrierewirkungen gegenüber chemischen Giften, miteinander zu kombinieren und so eine Optimierung der Eigenschaften der Membran 7 zu erreichen. Beispielsweise sind Cellulose und Cellulosederivate ausgezeichnete Sperrschichtmaterialien insbesondere gegenüber chemischen Schad- bzw. Giftstoffen, wie z. B. Kampfstoffen (Lost etc.), und werden von diesen Materialien nicht angegriffen bzw. aufgelöst, und zum anderen verhindern polyurethanbasierte Materialien eine Migration bzw. Diffusion der in der Celluloseschicht gegebenenfalls vorhandenen Weichmacher und dämpfen außerdem das durch die cellulosebasierte Kernschicht bedingte, beim Tragen auftretende Knistern. Deswegen ist es gemäß dieser besonderen Ausführungsform bevorzugt, daß im Fall eines Membranlaminats oder -verbunds die Kernschicht auf Basis eines Polymers auf Cellulosegrundlage gebildet wird, während die beiden Außenschichten der Membran 7 durch Polyurethanmembranen gebildet werden.

Um die Stabilität der gegebenenfalls vorhandenen Membran 7 zu erhöhen, ist es vorteilhaft, die Membran 7 auf einer in den Figuren nicht dargestellten flächigen Trägerschicht anzuordnen (z. B. auf einem vorzugsweise luftdurchlässigen Textilmaterial, wie z. B. einem textilen Flächengebilde, z. B. einem Gewebe, Gewirke, Gestricke, Gelege oder Textilverbundstoff). Zu diesen Zwecken kann die Membran 7 auf die Trägerschicht auflaminiert oder aufkaschiert sein, insbesondere mittels eines vorzugsweise punktförmig aufgetragenen Klebstoffes. Die flächige Trägerschicht für die Membran 7 sollte in diesem Fall ein geringes Flächengewicht von weniger als 150 g / m², insbesondere weniger als 100 g / m², vorzugsweise weniger als 40 g / m², aufweisen. Die flächige Trägerschicht für die Membran 7 wirkt quasi als Stützschicht und erhöht die mechanische Stabilität und Reißfestigkeit der Membran 7, was insbesondere dann von Bedeutung ist, wenn die Membran 7 gleichzeitig als Träger 10 für das Adsorptionsmaterial 6 dient.

Zur Erhöhung der des Tragekomforts einerseits und zur Erzielung einer guten Verschleißbeständigkeit andererseits ist es vorteilhaft, wenn die Membran 7 eine gewisse Elastizität aufweist. Insbesondere ist es vorteilhaft, wenn die Membran 7 zu mindestens 10 %, insbesondere zu mindestens 20 %, vorzugsweise zu mindestens 30 %, zumindest in eine Richtung gedehnt bzw. gestreckt werden kann. Auch der Schichtaufbau 2 insgesamt sollte zu den vorgenannten Zwecken neben einer guten Biegsamkeit auch eine gewisse Elastizität aufweisen; verglichen mit der Membran 7, ist die Elastizität des Schichtaufbaus 2 als Ganzes geringer, und im allgemeinen ist der Schichtaufbau 2 insgesamt zu mindestens 5 %, vorzugsweise zu mindestens 10 %, zumindest in eine Richtung dehnbar bzw. streckbar.

Gemäß einer besonderen, in den Fig. 1 und 2 nicht dargestellten Ausführungsform kann die Membran 7 gleichzeitig die Klebstoffschicht 11 zur Befestigung des Adsorptionsmaterials 6 an den Träger 10 darstellen. In diesem Fall muß die Membran 7 als kontinuierlich Schicht aufgetragen sein und Hafteigenschaften zur Fixierung des Adsorptionsmaterials 6 an den Träger 10 aufweisen; bei dieser besonderen Ausführungsform empfiehlt es sich, die Membran 7, die gleichzeitig Klebstoffschicht 11 ist, auf der im Tragezustand dem Fuß abgewandten Seite und das Adsorptionsmaterial 6 auf der im Tragezustand dem Fuß zugewandten Seite anzuordnen. Bei einer ganz besonderen Ausgestaltung dieser besonderen Ausführungsform kann der Träger 10 gänzlich entfallen, sofern die Membran 7 allein ausreichende Stabilität besitzt, um selbsttragend zu sein, d. h. die Membran 7 dient in diesem Fall gleichzeitig sowohl als Träger 10 wie auch als Klebstoffschicht 11 für das Adsorptionsmaterial 6 und ist somit Bestandteil der Adsorptionsschicht 5.

Der erfindungsgemäße Schuh bietet einen effizienten Schutz gegenüber chemischen Giften, insbesondere chemischen Kampfstoffen, bei gleichzeitig hohem Tragekomfort. Der entscheidende Vorteil des Schuhs nach der vorliegenden Erfindung besteht darin, daß die Schutzfunktion gegenüber chemischen Giften in den Schuh selbst integriert ist und kein zusätzlicher Ausrüstungsgegenstand (z. B. Überschuh, Socke etc.) erforderlich ist. Dadurch werden - im Vergleich zu den zuvor geschilderten Methoden des Standes der Technik - nicht nur eine beträchtliche Gewichtseinsparung und ein erhöhter Tragekomfort erreicht, sondern es wird zudem die Möglichkeit einer effizienten abdichtenden Verbindung des Übergangs zu einem ABC-Schutzanzug eröffnet, so daß chemische Gifte, z. B. Kampfstoffe, den Übergang von Schuhwerk/Schutzanzug nicht bzw. nicht ohne weiteres passieren können. Aufgrund dieser Eigenschaften eignet sich der Schuh nach der vorliegenden Erfindung insbesondere für den militärischen Einsatz oder den ABC-Einsatz (z. B. in der Form eines Militärstiefels oder ABC-Schutzstiefels).

Infolge der hohen Effizienz der Schutzfunktion der Adsorptionsschicht, die bedarfsweise durch die Verwendung einer Membran gegebenenfalls erhöht werden kann, lassen sich auch atmungsaktive Schuhaußenmaterialen, wie z. B. Leder, einsetzen, so daß sich auf diese Weise der Tragekomfort noch erhöhen läßt, ohne daß der Träger des Schuhs einer erhöhten Gefährdung durch die Verwendung eines atmungsaktiven Schuhaußenmaterials ausgesetzt ist.

Aufgrund der guten Biegsamkeit der einzelnen Schichten des erfindungsgemäßen Schuhs bzw. des Schichtaufbaus insgesamt wird nicht nur ein guter Tragekomfort erreicht, sondern außerdem auch eine gute Verschleißbeständigkeit des erfindungsgemäßen Schuhs.

Durch die erfindungsgemäße Ausgestaltung des Schuhs nach der vorliegenden Erfindung wird eine ausgezeichnete Barrierewirkung gegenüber chemischen Kampfstoffen erreicht. Die Barrierewirkung gegenüber chemischen Kampfstoffen, insbesondere Bis-[2-chlorethyl]sulfid (synonym auch als Senfgas, Lost oder Gelbkreuz bezeichnet), gemessen nach CRDEC-SP-84010, Methode 2.2, beträgt höchstens 4 µg / cm² pro 24 h, insbesondere höchstens 3,5 µg / cm² pro 24 h, vorzugsweise höchstens 3,0 µg / cm² pro 24 h, besonders bevorzugt höchstens 2,5 µg / cm² pro 24 h.

Die Herstellung des erfindungsgemäßen Schuhs kann in an sich bekannter Weise erfolgen. Dies ist dem mit der Herstellung von Schuhwerk befaßten Fachmann bestens bekannt, so daß es diesbezüglich keiner weitergehenden Ausführungen bedarf.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Schuh (1), insbesondere Stiefel, mit Schutzfunktion gegenüber chemischen Giften, insbesondere chemischen Kampfstoffen, mit mehrschichtigem Schichtaufbau (2), aufweisend eine im Tragezustand vom Fuß abgewandte Außenschicht (3) und eine der Außenschicht (3) zugeordnete, im Tragezustand dem Fuß zugewandte Innenschicht (4), insbesondere ein Schuhinnenfutter,
**dadurch gekennzeichnet,**
**daß** zwischen der Außenschicht (3) und der Innenschicht (4) zusätzlich eine Adsorptionsschicht (5) mit einem chemische Gifte adsorbierenden Adsorptionsmaterial (6) angeordnet ist und
**daß** die Adsorptionsschicht (5) als Adsorptionsmaterial (6) Aktivkohlefasem in Form eines Aktivkohleflächengebildes umfaßt.

2. Schuh nach Anspruch 1, **dadurch gekennzeichnet, daß** der Schuh (1) zusätzlich mindestens eine gegenüber chemischen Giften, insbesondere chemischen Kampfstoffen, zumindest im wesentlichen undurchlässige oder aber deren Durchtritt zumindest verzögernde Membran (7) aufweist, insbesondere wobei die Membran (7) zumindest im wesentlichen wasser- und/oder luftundurchlässig, vorzugsweise aber wasserdampfdurchlässig ausgebildet ist und/oder die Membran (7) zwischen der Außenschicht (3) und der Adsorptionsschicht (5) und/oder zwischen der Innenschicht (4) und der Adsorptionsschicht (5) angeordnet sein kann.

3. Schuh nach einem oder mehreren der vorangehenden Ansprüche, **dadurch gekennzeichnet, daß** zwischen der Innenschicht (4) und der Adsorptionsschicht (5) oder aber zwischen der Innenschicht (4) und der Membran (7) oder aber vorzugsweise zwischen der Adsorptionsschicht (5) und der Membran (7) außerdem eine Abstandsschicht (8), vorzugsweise in Form eines Vlieses (Nonwoven), einer Schaumstoffschicht oder eines textilen Flächengebildes, insbesondere Gewirkes, angeordnet ist.

4. Schuh nach einem oder mehreren der vorangehenden Ansprüche, **dadurch gekennzeichnet, daß** die einzelnen Schichten (3, 4, 5, 7, 8) des Schichtaufbaus (2) jeweils miteinander verbunden sind und/oder daß die einzelnen Schichten (3, 4, 5, 7, 8) des Schichtaufbaus (2) einen Verbund ausbilden.

5. Schuh nach einem oder mehreren der vorangehenden Ansprüche, **dadurch gekennzeichnet, daß** der Schuh (1) mit einer zumindest im wesentlichen wasser- und/oder luftundurchlässigen Sohle (9), die gegenüber chemischen Giften, insbesondere chemischen Kampfstoffen, zumindest im wesentlichen undurchlässig ist oder aber deren Durchtritt zumindest verzögert, ausgestattet ist, insbesondere wobei die Sohle (9) aus einem Kunststoff- und/oder Gummimaterial bestehen kann.

6. Schuh nach einem oder mehreren der vorangehenden Ansprüche, **dadurch gekennzeichnet, daß** die Außenschicht (3) aus einem atmungsaktiven, insbesondere wasserdampfdurchlässigen Material, insbesondere einem Leder oder Polyamiden wie Nylon, gebildet ist oder daß die Außenschicht (3) aus einem Kunststoffmaterial, vorzugsweise Butylgummi, Kautschuken, insbesondere Chloroprenkautschuken wie Neoprenen oder Fluorkautschuken, oder Fluorelastomeren, gebildet.

7. Schuh nach einem oder mehreren der vorangehenden Ansprüche, **dadurch gekennzeichnet, daß** die Außenschicht (3) oleophobiert und/oder hydrophobiert ist, insbesondere durch eine spezielle Imprägnierung.

8. Schuh nach einem oder mehreren der vorangehenden Ansprüche, **dadurch gekennzeichnet, daß** die Innenschicht (4), insbesondere das Schuhinnenfutter, als ein Textilmaterial, vorzugsweise ein luftdurchlässiges Textilmaterial, insbesondere ein textiles Flächengebilde, ausgebildet ist.

9. Schuh nach Anspruch 8, **dadurch gekennzeichnet, daß** das Textilmaterial ein Gewebe, Gewirke, Gestricke, Gelege, Textilverbundstoff oder Vlies sein kann, vorzugsweise eine Web- oder Wirkware oder ein Vliesstoff.

10. Schuh nach einem oder mehreren der vorangehenden Ansprüche, **dadurch gekennzeichnet, daß** das Aktivkohleflächengebilde ein Flächengewicht von 20 bis 200 g/m², insbesondere 30 bis 150 g /m², vorzugsweise 50 bis 120 g /m², aufweist.

11. Schuh nach einem oder mehreren der vorangehenden Ansprüche, **dadurch gekennzeichnet, daß** das Aktivkohleflächengebilde ein Aktivkohlegewebe, -gewirke, -gelege oder -verbundstoff ist.

12. Schuh nach Anspruch 11, **dadurch gekennzeichnet, daß** das Aktivkohlegewebe, -gewirke, -gelege oder der Aktivkohleverbundstoff auf Basis von carbonisierter und aktivierter Cellulose und/oder eines carbonisierten und aktivierten Acrylnitrils ausgebildet ist.

13. Schuh nach einem oder mehreren der vorangehenden Ansprüche, **dadurch gekennzeichnet, daß** das Adsorptionsmaterial (6) der Adsorptionsschicht (5), außerdem mit mindestens einem Katalysator imprägniert ist, insbesondere wobei als Katalysator Enzyme und/oder Metallionen, vorzugsweise Kupfer-, Silber-, Cadmium-, Platin-, Palladium-, Zink- und/oder Quecksilberionen, verwendet sind und/oder die Menge an Katalysator 0,05 bis 12 Gew.-%, vorzugsweise 1 bis 10 Gew.-%, besonders bevorzugt 2 bis 8 Gew.-%, bezogen auf das Gewicht der Adsorptionsschicht (5), beträgt.

14. Schuh nach einem oder mehreren der vorangehenden Ansprüche, **dadurch gekennzeichnet, daß** das Adsorptionsmaterial (6) der Adsorptionsschicht (5) zu mindestens 50 %, insbesondere zu mindestens 60 %, vorzugsweise zu mindestens 70 %, für die zu adsorbierenden chemischen Gifte, insbesondere chemischen Kampfstoffe, frei zugänglich ist.

15. Schuh nach einem oder mehreren der vorangehenden Ansprüche, **dadurch gekennzeichnet, daß** die Membran (7) eine kontinuierliche, insbesondere geschlossene oder allenfalls mikroporöse Membran ist und/oder daß die Dicke der Membran (7) 1 bis 500 µm, insbesondere 1 bis 250 µm, vorzugsweise 1 bis 100 µm, bevorzugt 1 bis 50 µm, besonders bevorzugt von 2,5 bis 30 µm, ganz besonders bevorzugt 5 bis 25 µm, beträgt und/oder daß die Membran (7) bei 25 °C und bei einer Dicke von 50 µm eine Wasserdampfdurchlässigkeit von mindestens 12,5 l/m² pro 24 h, insbesondere mindestens 17,5 l/m² pro 24 h, vorzugsweise mindestens 20 l/m² pro 24 h oder mehr, aufweist und/oder daß die Membran (7) einen Wasserdampfdurchgangswiderstand Rₑₜ unter stationären Bedingungen, gemessen nach DIN EN 31 092:1993 (Februar 1994) und internationaler Norm ISO 11 092, bei 35 °C von höchstens 25 (m² · Pascal) / Watt, insbesondere höchstens 20 (m² · Pascal) / Watt, vorzugsweise höchstens 13 (m² · Pascal) / Watt, bei einer Dicke von 50 µm aufweist.

16. Schuh nach einem oder mehreren der vorangehenden Ansprüche, **dadurch gekennzeichnet, daß** die Membran (7) allenfalls nur geringfügig quellfähig und/oder nur geringfügig wasseraufnahmefähig ist, insbesondere wobei die Quellfähigkeit und/oder das Wasseraufnahmevermögen der Membran (7) höchstens 35 %, insbesondere höchstens 25 %, bezogen auf das Eigengewicht der Membran (7), beträgt und/oder daß die Membran (7) gegenüber Flüssigkeiten, insbesondere Wasser, und/oder gegenüber Aerosolen zumindest im wesentlichen undurchlässig ist oder zumindest deren Durchtritt verzögert.

17. Schuh nach einem oder mehreren der vorangehenden Ansprüche, **dadurch gekennzeichnet, daß** die Membran (7) keine oder im wesentlichen keine stark hydrophilen Gruppen, insbesondere keine Hydroxylgruppen, aufweist und/oder daß die Membran (7) schwach hydrophile Gruppen, insbesondere Polyethergruppen, aufweist.

18. Schuh nach einem oder mehreren der vorangehenden Ansprüche, **dadurch gekennzeichnet, daß** die Membran (7) einen Kunststoff und/oder ein Polymer umfaßt und/oder hieraus besteht, insbesondere wobei der Kunststoff und/oder das Polymer aus der Gruppe von Polyurethanen, Polyetheramiden, Polyesteramiden, Polytetrafluorethylenen und/oder Polymeren auf Cellulosebasis und/oder Derivaten der vorgenannten Verbindungen ausgewählt sein kann.

19. Schuh nach einem oder mehreren der vorangehenden Ansprüche, **dadurch gekennzeichnet, daß** die Membran (7) als Reaktionsprodukt aus der Reaktion eines Isocyanats, insbesondere eines maskierten oder blokkierten Isocyanats, mit einem isocyanatreaktiven Vernetzer erhalten ist und/oder daß die Membran (7) eine polyurethanbasierte Membran ist und/oder daß die Membran (7) eine expandierte, gegebenenfalls mikroporöse Membran auf Basis von Polytetrafluorethylen ist.

20. Schuh nach einem oder mehreren der vorangehenden Ansprüche, **dadurch gekennzeichnet, daß** die Membran (7) als ein mehrschichtiges Laminat und/oder als ein mehrschichtiger Verbund ausgebildet ist, insbesondere wobei das Laminat und/oder der Verbund aus mindestens zwei, vorzugsweise mindestens drei miteinander verbundenen Schichten oder Lagen besteht.

21. Schuh nach Anspruch 20, **dadurch gekennzeichnet, daß** das Laminat oder der Verbund eine Kernschicht auf Basis eines Polymers auf Cellulosegrundlage und zwei mit der Kernschicht verbundene äußere Schichten, insbesondere auf Basis eines Polyurethans, eines Polyetheramids und/oder eines Polyesteramids, umfaßt, insbesondere wobei die Kernschicht auf Basis eines Polymers auf Cellulosegrundlage als 1 bis 100 µm, insbesondere 5 bis 50 µm, vorzugsweise 10 bis 20 µm dicke Membran ausgebildet sein kann und/oder insbesondere wobei die zwei mit der Kernschicht verbundenen äußeren Schichten jeweils als 1 bis 100 µm, insbesondere 5 bis 50 µm, vorzugsweise 5 bis 20 µm dicke Membran ausgebildet sein können.

22. Schuh nach einem oder mehreren der vorangehenden Ansprüche, **dadurch gekennzeichnet, daß** die Membran (7) auf einer vorzugsweise flächigen Trägerschicht angeordnet ist, insbesondere wobei die Trägerschicht als ein vorzugsweise luftdurchlässiges Textilmaterial, insbesondere ein textiles Flächengebilde, wie ein Gewebe, Gewirke, Gestricke, Gelege oder Textilverbundstoff, ausgebildet ist und/oder insbesondere wobei die Trägerschicht ein Flächengewicht von weniger als 150 g / m², insbesondere weniger als 100 g / m², vorzugsweise weniger als 40 g / m², aufweist und/oder insbesondere wobei die Membran (7) auf die Trägerschicht auflaminiert oder aufkaschiert ist, insbesondere mittels eines vorzugsweise punktförmig aufgetragenen Klebstoffes.

23. Schuh nach einem oder mehreren der vorangehenden Ansprüche, **dadurch gekennzeichnet, daß** die Membran (7) gleichzeitig die Klebstoffschicht (11) zur Befestigung des Adsorptionsmaterials (6) an den Träger (10) darstellt oder daß die Membran (7) gleichzeitig sowohl als Träger (10) wie auch als Klebstoffschicht (11) für das Adsorptionsmaterial (6) dient.

24. Schuh nach einem oder mehreren der vorangehenden Ansprüche, **dadurch gekennzeichnet, daß** der Schuh (1) eine Barrierewirkung gegenüber chemischen Kampfstoffen, insbesondere Bis[2-chlorethyl]sulfid (Senfgas, Lost, Gelbkreuz), gemessen nach CRDEC-SP-84010, Methode 2.2, von höchstens 4 µg / cm² pro 24 h, insbesondere höchstens 3,5 µg / cm² pro 24 h, vorzugsweise höchstens 3,0 µg / cm² pro 24 h, besonders bevorzugt höchstens 2,5 µg / cm² pro 24 h, aufweist.
